# EUROPEAN PATENT SPECIFICATION

(11) **EP 2 762 614 B1**
(45) Date of publication and mention of the grant of the patent: **23.03.2016**
(21) Application number: 14250013.1
(22) Date of filing: 29.01.2014
(51) Int. Cl.: C25B 15/08, C25B 1/06, C25B 9/06

(54) **A gas generator**
Gasgenerator
Générateur de gaz

(30) Priority: 01.02.2013 GB 201301782
(43) Date of publication of application: 06.08.2014
(73) Proprietor: Hydrotekniks Group Holding Limited, Buckinghamshire HP18 0NF (GB)
(72) Inventor: Chambers, Timothy, Waddesdon, Buckinghamshire (GB); Bennet, Domenico, Aylesbury, Buckinghamshire HP21 7AD (GB)
(74) Representative: Turner, Richard Charles

(56) References cited:
- US-A- 4 425 215
- US-A1- 2010 065 419
- US-A1- 2011 089 029

## Description

This invention relates to a gas generator and to a method of generating gas from the gas generator.

The generation of gas via electrolysis has been known since at least 1800, when William Nicholson and Johann Ritter decomposed water into hydrogen and oxygen. Electrolysis is the passage of a direct electric current through an ionic substance that is either molten or dissolved in a suitable solvent, resulting in chemical reactions at the electrodes and separation of materials. The main components required to achieve electrolysis are an electrolyte, which is a substance containing free ions that are the carriers of electric current in the electrolyte, a direct current (DC) supply, which provides the energy necessary to create or discharge the ions in the electrolyte and two electrodes, which provide an electrical conductor that provides the physical interface between the electrical circuit providing the energy and the electrolyte.

United State of America Patent US 8,303,798 B2 discloses a hydrogen generator designed for use with gas and diesel engines. The Patent discloses a unit that produces hydrogen gas (Browns gas (HHO)) that can be used as an assist to diesel and gas engines. The gas is produced from distilled water, using a stainless steel plate design. The internal design of the unit allows it to produce significantly more hydrogen, drawing significantly less current or electricity from its power source. The internal design is in the placement of positive, negative and neutral plates to produce the gas. However, the complexity of the design of the hydrogen generator disclosed in this Patent is relatively expensive to construct and the inefficiency of the gas collection in the generator is not ideal as a functioning gas generator.

United States of America Patent Application Publication US 2010/065419 discloses a hydrogen and oxygen generator having semi-isolated series cell construction.

It is therefore an object of the invention to improve upon the known art.

According to the present invention, there is provided a gas generator comprising a watertight and airtight unit comprising a gas collector with a gas outlet on a top surface thereof and comprising an internal profile of a funnel shape, with sloping sides sloping upwards to the gas outlet, a plurality of metal plates, at least one metal plate located on each side of the gas collector, and each provided with at least one hole in an upper region of the plate and at least one hole in a lower region of the plate, two end plates, located at opposite ends of the unit, and a plurality of non-conductive spacers, located so that each metal plate has a spacer on each side.

Owing to the invention, it is possible to provide a gas generator that efficiently produces gas from an electrolyte and efficiently captures the produced gas using a central gas collector. The gas collector and the arrangement of metal plates either side of the gas collector ensures that there is an unrestricted flow of liquid in the unit and that the gas produced via the electrolysis can easily escape through the central gas collector. The design of prior art gas collectors is such that restrictions in the fluid flows within the generator inhibit the rate at which the gas can be generated. The improved gas collector does not suffer from this inhibition of fluid flow within the gas generator.

The gas collector has an internal profile of a funnel shape, with sloping sides sloping upwards to the gas outlet. The central gas collector collects the gas that is generated by the electrolysis of the electrolyte within the unit. The gas outlet from the collector is centrally located on the top surface and the internal sloping sides funnel the gas upwards to the gas outlet. This provides an effective and efficient removal of the gas from the unit as it is produced by the electrolysis.

Preferably, the gas collector, the metal plates and the end plates are all substantially rectangular (preferably square) and are all arranged in substantially parallel vertical planes. This provides the simplest design of the unit of the gas generator. The components of the gas generator are essentially arranged parallel to each other in a horizontal row, with the spacers separating the different components.

Advantageously, the gas collector is further provided with a fluid inlet in a lower region of the gas collector and further comprises a fluid reservoir connected to the fluid inlet. The electrolyte can be supplied directly to the unit via a fluid inlet in the gas collector. This enables the unit to be kept filled with electrolyte as the electrolysis occurs, which causes some of the liquid to be turned into gas as the process continues. By introducing the replacement electrolyte into the central gas collector, this assists in the flow of fluid in the unit, pushing liquid out from the centre of the unit and causing the gas to flow towards the centre and out of the gas collector.

Ideally, a power supply is connected to one metal plate on each side of the gas collector and the unit is provided with a plurality of metal plates on both sides of the gas collector and at least one metal plate on each side of the gas collector is not connected to the power supply. Each metal plate that is connected to the power supply comprises a connecting tag, located at a bottom edge of the metal plate, to which the power supply is connected. The provision of multiple metal plates, some of which are neutral and not connected to the power supply provides a means of delivering the electrolysis in the unit and allows the fluid in the unit to flow through the holes in the metal plates.

Embodiments of the present invention will now be described, by way of example only, with reference to the accompanying drawings, in which:-
Figure 1 is a schematic diagram of a fuel system with a gas generator,
Figure 2 is a side view of the gas generator,
Figure 3 is a perspective view of two metal plates of the gas generator,
Figure 4 is a schematic diagram of the gas generator,
Figure 5 is a vertical cross-section through a gas collector of the gas generator, and
Figure 6 is a perspective exploded view of two metal plates, an end plate and part of the gas collector of the gas generator.

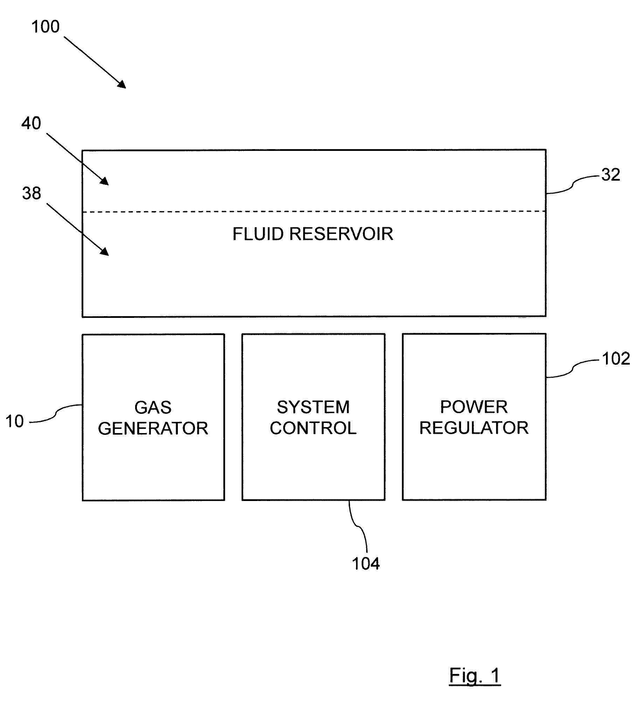

Figure 1 shows a schematic diagram of a fuel system 100. The fuel system 100 comprises a gas generator 10, which is operable to generate hydrogen and oxygen gas 40 using electrolysis of an electrolyte 38, a fluid reservoir 32, which is connected to the gas generator 10 and arranged to supply the electrolyte 38 to the gas generator 10, a power regulator 102, which is connected to an external power supply and arranged to regulate the received power from the external power supply and a system control device 104, which is connected to the power regulator 102 and the gas generator 10 and arranged to control the power supplied to the gas generator 10 from the power regulator 102. The power regulator 102 will ensure that no more than 36A is drawn from the external power supply. The gas generator 10 is gravity fed with the electrolyte 38 from the fluid reservoir 32 and the produced gas 40 is fed back to the fluid reservoir 32.

The fuel system 100 is intended to be used in a combustion system, for example a suitable vehicle such as a lorry or boat, or in a heating system such as a gas fired boiler used domestically or commercially. If the fuel system 100 is to be used in a combustion system, then the gas generated, which is a mixture of hydrogen and oxygen, is delivered as close as possible to the fuel ignition of the internal combustion engine. Since all combustion systems require oxygen to function, then in general there will be an air inlet to the combustion system that can be used to deliver the gas output to the ignition.

The gas outlet of the fuel system 100 can be connected to the air inlet of the combustion system and this will provide the hydrogen and oxygen produced by the gas generator 10 directly into that combustion system, in order to improve the efficiency of that combustion system (by between 10% and 50%) and also to reduce the ultimate pollution output of that system. The external source of power, for example, can be the alternator or another source of DC power of the vehicle to which the fuel system is attached. The system control device 104 is responsible for the control of the power into the fuel system 100 and ensures that power is only drawn from the external power source when it is safe to do so. For example, the system control device 104 will sense and wait until the battery is at an optimum level whether 12 or 24 volts and the alternator is producing at least 14.2 or 26.6 volts is available from the external power source before drawing any power.

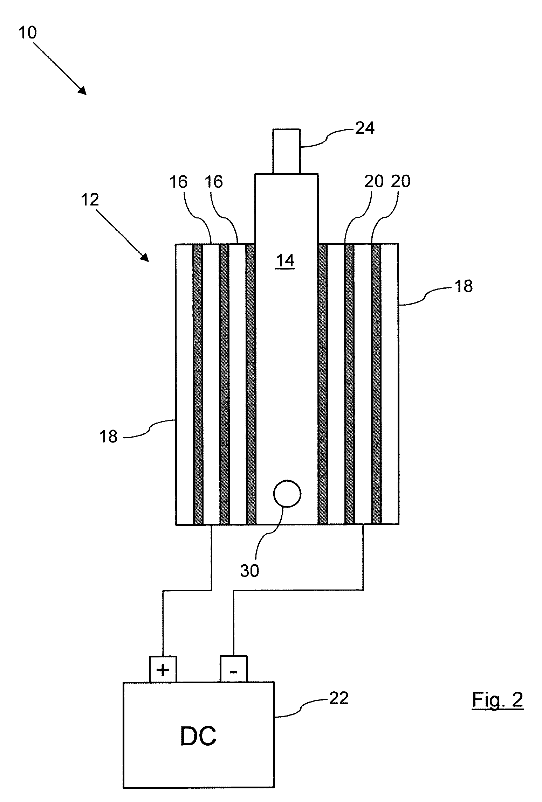

Figure 2 shows a side view of the gas generator 10, which comprises a watertight and airtight unit 12 and a local power supply 22. The provision of a local power supply 22 removes the requirement for the system control device 104 and power regulator 102, shown in the Figure 1 embodiment. The unit 12 comprises a gas collector 14, metal plates 16, two end plates 18 and a plurality of non-conductive spacers (preferably with O-rings) 20, located so that each metal plate 16 has a spacer 20 on each side. The gas collector 14, the metal plates 16 and the end plates 18 are all substantially rectangular and are all arranged in substantially parallel vertical planes. The gas collector 14 is centrally located between the metal plates 16 and is provided with a gas outlet 24 on a top surface thereof.

The plurality of metal plates 16 are arranged so that at least one metal plate 16 is located on each side of the gas collector 14, and each metal plate 16 is provided with at least one hole in an upper region of the plate 16 and at least one hole in a lower region of the plate 16. The two end plates 18 are located at opposite ends of the unit 12, and the plurality of non-conductive spacers 20 are located so that each metal plate 16 has a spacer 20 on each side. The power supply 22 is connected to two different metal plates 16, one on each side of the gas collector 14.

The gas collector 14 is provided with a fluid inlet 30 in a lower region of the gas collector 14. Essentially the electrolyte 38 is introduced into the unit 12 via the fluid inlet 30 and when current is provided from the power supply 22, then the gas 40 that is generated is outputted via the gas outlet 24 on the top surface of the gas collector 14. The holes in the metal plates 16 allow the electrolyte 38 to flow through the unit 12 and allow the gas produced to circulate through the unit 12 until it reaches the gas collector 14, where it can be outputted via the gas outlet 24.

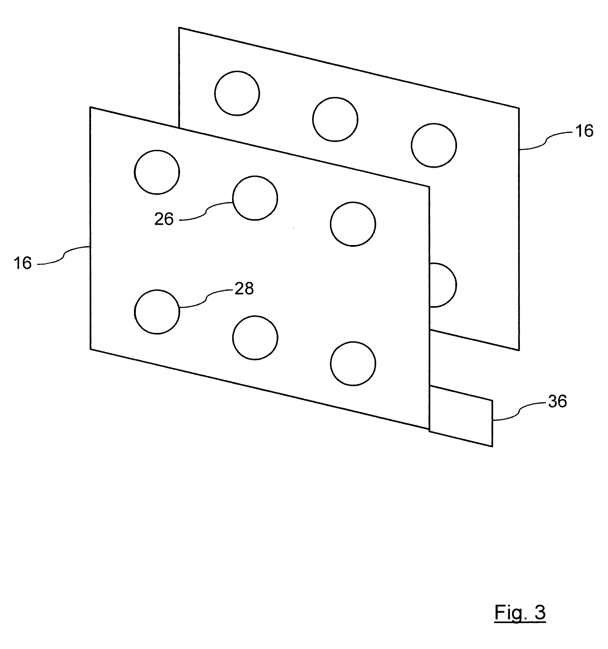

The unit 12 is provided with a plurality of metal plates 16 on both sides of the gas collector 14 and at least one metal plate 16 on each side of the gas collector 14 is not connected to the power supply 22. Figure 3 shows two such metal plates 16 (not to scale and with the intermediate spacer removed for ease of understanding) in perspective to illustrate the positioning and structure of the metal plates 16 within the unit 12. Each metal plate 16 is provided with three holes 26 in an upper region of the plate 16 and three holes 28 in a lower region of the plate 16.

The power supply 22 is connected to one metal plate 16 on each side of the gas collector 14. Each metal plate 16 that is connected to the power supply 22 comprises a connecting tag 36, located at a bottom edge of the metal plate 16, to which the power supply 22 is connected. The neutral plates 16 do not have the connecting tag 36. Figure 2 shows an embodiment with one neutral plate 16 on either side of the central gas collector 14, but there could be additional metal plates 16, for example with three plates 16 on either side of the central gas collector 14, one of which is connected to the power supply 22 and the other two of which are neutral plates. The polarity of the power supply 22 can be reversed periodically. The power supply 22 can be arranged to provide, for example, 108 Watts at 12 Volts and 9 Amps or 216 Watts at 24 Volts and 9 Amps.

The spacing between the metal plates 16 is created by 3mm spacers with O-rings 20 which are essentially gasket carriers with O-ring seals that run along the perimeter of the metal plates 16 to provide an effective seal. The spacers 20 provide the optimum spacing between metal plates 16 for gas production within the unit 12. The space between the metal plates 16 is filled with the electrolyte 38 that flows around the unit 12 through the holes 26 and 28 in the metal plates 16. Of course, the end plates 18 that close the unit 12 do not have any holes in them. As the gas 40 is produced during the process of electrolysis, then the gas 40 can flow through the upper holes 26 back to the gas collector 14 to exit the unit 12.

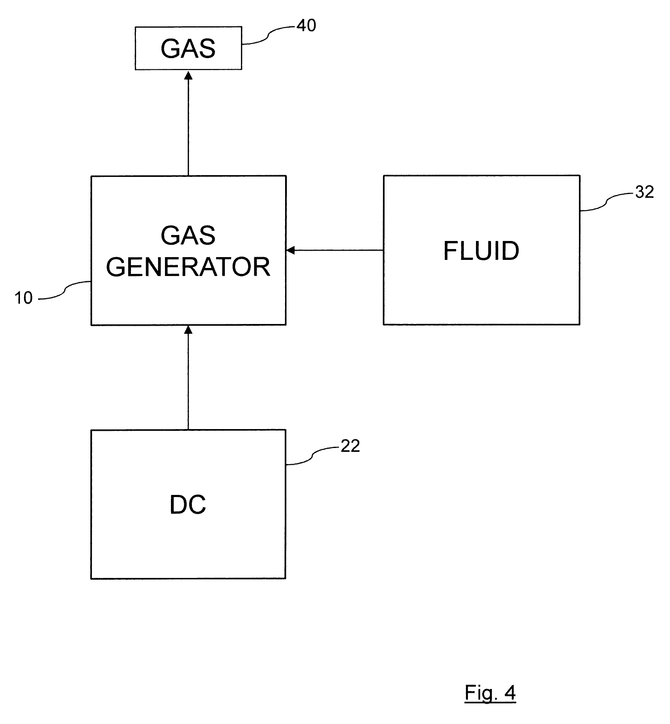

The gas generator 10, which is normally comprised of multiple units 12, is connected to the fluid reservoir 32, which contains the electrolyte 38, and is connected to the fluid inlet 30. This is illustrated schematically in Figure 4. The power supply 22 supplies DC current to the gas generator 10 and the fluid reservoir 32 supplies the electrolyte 38 to the gas generator 10. The power supply 22 supplies a direct current to the connected metal plates 16 of the gas generator 10, which provides the energy for the process of electrolysis that takes place inside the gas generator 10. If the gas generator 10 is comprised of multiple units 12, then the fluid reservoir 32 will supply electrolyte 38 to all of the units 12 and the power supply 22 will supply power to all of the units 12.

The electrolyte 38 that is used in the gas generator 10 is preferably an H₂0 (water) solution that has sufficient ions present, for example through the addition of one or more suitable salts. Once the DC current is supplied to the metal plates 16 of the gas generator 10, then electrolysis of the water solution will take place and H₂ (hydrogen) and O₂ (oxygen) gas will be produced from the gas outlet 24. This gas 40 can then be provided for immediate use. As discussed above, the gas generator 10 is intended to be used in a combustion system, for example a suitable vehicle such as a lorry or boat or in a heating system such as a gas fired boiler used domestically or commercially.

If the gas generator 10 is to be used in a combustion system then the gas generated, which is a mixture of hydrogen and oxygen, is delivered as close to the fuel combustion chamber as possible. Since all combustion systems require oxygen to function, then in general there will be an air inlet to the combustion system that is used to deliver oxygen to the ignition. The gas outlet 24 can be connected to the air inlet of the combustion system and this will provide the hydrogen and oxygen directly into that combustion system to improve the efficiency of that system and also to reduce the pollution output of that system.

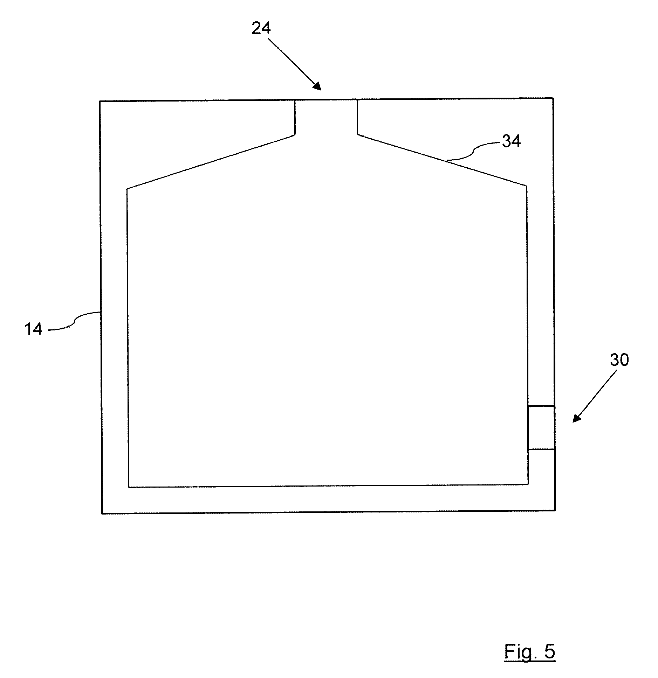

Figure 5 shows a vertical cross-section through the gas collector 14, which has an internal profile of a funnel shape, with sloping sides 34 sloping upwards to the gas outlet 24. The central gas collector 14 collects and outputs the gas that is generated by the electrolysis of the electrolyte 38 within the gas generator 10. The gas outlet 24 is centrally located on the top surface of the gas collector 14 and the sloping sides 34 funnel the gas upwards (which obviously rises in a liquid) to the gas outlet 24. This provides an effective and efficient removal of the gas from the gas generator 10 as it is produced by the electrolysis.

The gas collector 14 is essentially a 25mm ring of material such as plastics with a fluid inlet 30 at the bottom and a gas outlet 24 at the top, the ring of material defining an open chamber for the electrolyte 38. The sides of the gas collector 14 are open, with a spacer plus O-ring 20 sealing the connection between the gas collector 14 and an adjacent metal plate 16, one on each side of the gas collector 14. The metal plate 16 on each side that is closest to the gas collector 14 may be a neutral plate or may be positive or negative plate that is connected to the power supply 22.

Each unit 12 of the gas generator 10 is designed with the gas collector 14 in the middle of a horizontal row of metal plates 16 that are separated by the spacers with O-rings 20, with an end plate 18 at each end of the row. The internal metal plates 16 (not the end plates 18) are each provided with holes at lower and upper locations. These holes allow the fluids (the electrolyte 38 and the produced gas 40) to flow within the body of the units 12, with the electrolyte 38 flowing outwards from the gas collector 12 through the lower holes and the generated gas 40 flowing inwards back to the gas collector 14 through the upper holes. This creates an even flow around the units 12 of the gas generator 10.

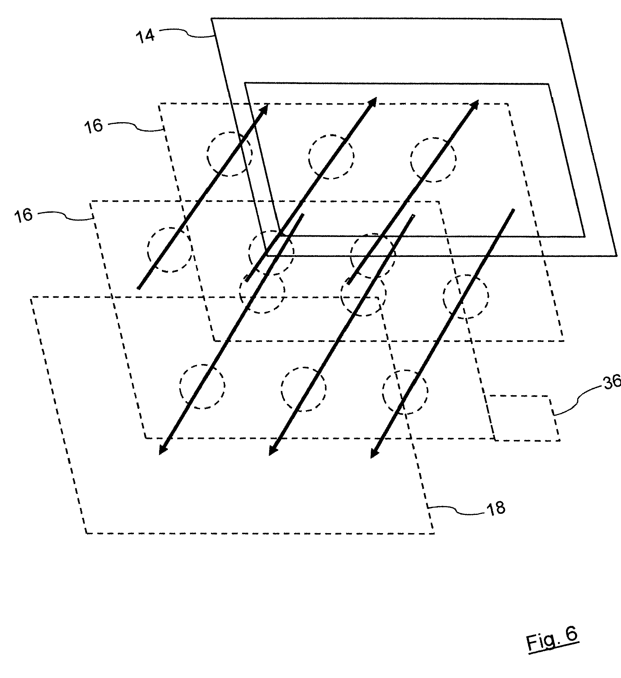

Figure 6 shows a view similar to Figure 3 of some of the internal components of the gas generator 10. The components are an end plate 18, two metal plates 16 and a side view of the edge of the gas collector 14. These components are not drawn to scale and are shown in exploded view with the spacers with O-rings 20 removed for ease of understanding. The arrows in the Figure illustrate the fluid flow inside the gas generator 10. One of the metal plates 16 is connected to the power supply 22 via the tag 36. The other metal plate 16 shown is a neutral plate not connected to the power supply 22.

Since each unit 12 of the gas generator 10 is symmetrical, the other side of the gas collector 14 is configured and arranged in the same manner; with two metal plates 16 enclosed by an end plate 18 on the outside, with spacers with O-rings 20 in-between the metal plates 16 and their adjacent components. The fluid flow on the other side of the gas collector 14 is exactly the same as shown in Figure 6. The holes in the metal plates 16 allow the flow of electrolyte and generated gas throughout the gas generator 10. The metal plate 16 on the other side of the gas collector 14 that is connected to the power supply 22 is connected to the opposite pole of the power supply 22.

As DC current is supplied to the two metal plates 16 (one on each side of the gas collector 14), then the electrolysis of the aqueous ionic solution 38 within the units 12 of the gas generator 10 begins to take place. The gas 40 produced will rise to the top of the gas generator 10 and flow through the upper holes in the metal plates 16 back to the central gas collector 14, for exit through the gas outlet 24 at the top of the gas collector 14. This will draw the liquid 38 outwards from the gas collector 14 through the lower holes in the metal plates creating a smooth and even flow of fluid within the gas generator 10.

Although the gas generator 10 is shown as a single component producing gas from the electrolyte 38 under an electrolysis process, multiple units 12 can be used in series, to increase the amount of gas being produced. If multiple units 12 are being used then they can be physically arranged in a series, with a row of units 12 physically connected together, with the end plates 18 of two adjacent units 12 in contact (or constructed so that a single end plate 18 performs the same function for two adjacent units 12). Each individual unit 12 may have its own power supply 22 and fluid reservoir 32 or these may be shared, with a single power supply 22 providing DC current to all of the individual units 10 and a single fluid reservoir 32 being connected to the fluid inlets 30 of all the units 12.

## Claims

1. A gas generator (10) for gas production via electrolysis, comprising a watertight and airtight unit (12) comprising:
o a gas collector (14) with a gas outlet (24) on a top surface thereof and comprising an internal profile of a funnel shape, with sloping sides (34) sloping upwards to the gas outlet (24),
o a plurality of metal plates (16), at least one metal plate (16) located on each side of the gas collector (14), and each provided with at least one hole (26) in an upper region of the plate (16) and at least one hole (28) in a lower region of the plate (16),
o two end plates (18), located at opposite ends of the unit (12), and
o a plurality of non-conductive spacers (20), located so that each metal plate (16) has a spacer (20) on each side.

2. A gas generator according to claim 1, wherein the gas collector (14) is further provided with a fluid inlet (30) in a lower region of the gas collector (14).

3. A gas generator according to claim 2, and further comprising a fluid reservoir (32) connected to the fluid inlet (30).

4. A gas generator according to any preceding claim, and further comprising a power supply (22) connected to one metal plate (16) on each side of the gas collector (14).

5. A gas generator according to claim 4, wherein the unit (12) is provided with a plurality of metal plates (16) on both sides of the gas collector (14) and at least one metal plate (16) on each side of the gas collector (14) is not connected to the power supply (22).

6. A gas generator according to claim 4 or 5, wherein each metal plate (16) that is connected to the power supply (22) comprises a connecting tag (36), located at a bottom edge of the metal plate (16), to which the power supply (22) is connected.

7. A gas generator according to any preceding claim, wherein each metal plate (16) is provided with three holes (26) in an upper region of the plate (16) and three holes (28) in a lower region of the plate (16).

## Patentansprüche

1. Gasgenerator (10) zur Gaserzeugung durch Elektrolyse, der eine wasserdichte und luftdichte Einheit (12) umfasst, umfassend:
o einen Gassammler (14) mit einem Gasauslass (24) auf einer oberen Fläche desselben, der ein internes Profil mit einer Trichterform umfasst, mit geneigten Seiten (34), die zum Gasauslass (24) schräg ansteigen,
o mehrere Metallplatten (16), wobei sich mindestens eine Metallplatte (16) auf jeder Seite des Gassammlers (14) befindet und jede mit mindestens einem Loch (26) in einem oberen Bereich der Platte (16) und mindestens einem Loch (28) in einem unteren Bereich der Platte (16) versehen ist,
o zwei Endplatten (18), die sich an entgegengesetzten Enden der Einheit (12) befinden, und
o mehrere nichtleitende Abstandshalter (20), die so positioniert sind, dass jede Metallplatte (16) einen Abstandshalter (20) auf jeder Seite hat.

2. Gasgenerator nach Anspruch 1, wobei der Gassammler (14) ferner mit einem Fluideinlass (30) in einem unteren Bereich des Gassammlers (14) versehen ist.

3. Gasgenerator nach Anspruch 2, der ferner ein Fluidreservoir (32) umfasst, das an den Fluideinlass (30) angeschlossen ist.

4. Gasgenerator nach einem der vorherigen Ansprüche, der ferner eine Stromversorgung (22) umfasst, die an eine Metallplatte (16) auf jeder Seite des Gassammlers (14) angeschlossen ist.

5. Gasgenerator nach Anspruch 4, wobei die Einheit (12) mit mehreren Metallplatten (16) auf beiden Seiten des Gassammlers (14) versehen ist und mindestens eine Metallplatte (16) auf jeder Seite des Gassammlers (14) nicht an die Stromversorgung (22) angeschlossen ist.

6. Gasgenerator nach Anspruch 4 oder 5, wobei jede Metallplatte (16), die mit der Stromversorgung (22) verbunden ist, einen Anschlussadapter (36) umfasst, der sich an einer unteren Kante der Metallplatte (16) befindet und an den die Stromversorgung (22) angeschlossen ist.

7. Gasgenerator nach einem der vorherigen Ansprüche, wobei jede Metallplatte (16) mit drei Löchern (26) in einem oberen Bereich der Platte (16) und drei Löchern (28) in einem unteren Bereich der Platte (16) versehen ist.

## Revendications

1. Générateur de gaz (10) pour la production de gaz par le biais de l'électrolyse, comprenant une unité étanche à l'eau et à l'air (12), comprenant :
o un collecteur de gaz (14) avec une sortie de gaz (24) sur une surface supérieure de celui-ci et comprenant un profil interne en forme d'entonnoir avec des côtés inclinés (34) s'inclinant de manière ascendante vers la sortie de gaz (24),
o une pluralité de plaques métalliques (16), au moins une plaque métallique (16) située de chaque côté du collecteur de gaz (14) et chacune dotée d'au moins un trou (26) dans une zone supérieure de la plaque (16) et au moins un trou (28) dans une zone inférieure de la plaque (16),
o deux plaques d'extrémité (18), situées aux extrémités opposées de l'unité (12), et
o une pluralité d'entretoises non conductrices (20) situées de manière que chaque plaque métallique (16) possède une entretoise (20) de chaque côté.

2. Générateur de gaz selon la revendication 1 dans lequel le collecteur de gaz (14) est doté en plus d'une entrée de fluide (30) dans une zone inférieure du collecteur de gaz (14).

3. Générateur de gaz selon la revendication 2 et comprenant en plus un réservoir de fluide (32) raccordé à l'entrée de fluide (30).

4. Générateur de gaz selon l'une quelconque des revendications précédentes et comprenant en plus une alimentation en courant (22) raccordée à une plaque métallique (16) de chaque côté du collecteur de gaz (14).

5. Générateur de gaz selon la revendication 4 dans lequel l'unité (12) est dotée d'une pluralité de plaques métalliques (16) des deux côtés du collecteur de gaz (14) et au moins une plaque métallique (16) de chaque côté du collecteur de gaz (14) n'est pas raccordée à l'alimentation en courant (22).

6. Générateur de gaz selon la revendication 4 ou 5 dans lequel chaque plaque métallique (16) qui est raccordée à l'alimentation en courant (22) comprend une cosse de connexion (36) située à un bord inférieur de la plaque métallique (16), à laquelle l'alimentation en courant (22) est raccordée.

7. Générateur de gaz selon l'une quelconque des revendications précédentes dans lequel chaque plaque métallique (16) est dotée de trois trous (26) dans une zone supérieure de la plaque (16) et trois trous (28) dans une zone inférieure de la plaque (16).
